# EUROPEAN PATENT SPECIFICATION

(11) **EP 2 214 451 B1**
(45) Date of publication and mention of the grant of the patent: **03.10.2012**
(21) Application number: 09305089.6
(22) Date of filing: 30.01.2009
(51) Int. Cl.: H04W 76/02

(54) **Method for managing resources in a wireless communication system, and control node for implementing the method**
Verfahren zur Verwaltung von Ressourcen in einem drahtlosen Kommunikationssystem und Steuerknoten zur Implementierung des Verfahrens
Procédé de gestion de ressources dans un système de communication sans fil et noeud de contrôle pour la mise en oeuvre du procédé

(43) Date of publication of application: 04.08.2010
(73) Proprietor: Alcatel Lucent, 75007 Paris (FR)
(72) Inventor: Godin, Philippe, 78141 Velizy (FR)
(74) Representative: Kleinbub, Oliver

(56) References cited:
- WO-A-2008/074669
- WO-A-2008/127662
- ETRI: "Attach Procedure from LTE Access" 3GPP TSG SA WG2 ARCHITECTURE - S2#56C REL-8 AD-HOC, S2-071423, WARSAW, POLAND, vol. s2-071423, no. 56c, 26 March 2007 (2007-03-26), pages 1-5, XP002491696
- ALCATEL-LUCENT: "Default Bearer" 3GPP DRAFT; R3-090402_DEFTBEARER, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, no. Athens, Greece; 20090209, 9 February 2008 (2008-02-09), XP050325161 [retrieved on 2009-02-04]

## Description

The present invention relates to the management of resources in a wireless communication system. It is in particular directed to Long Term Evolution (LTE) systems.

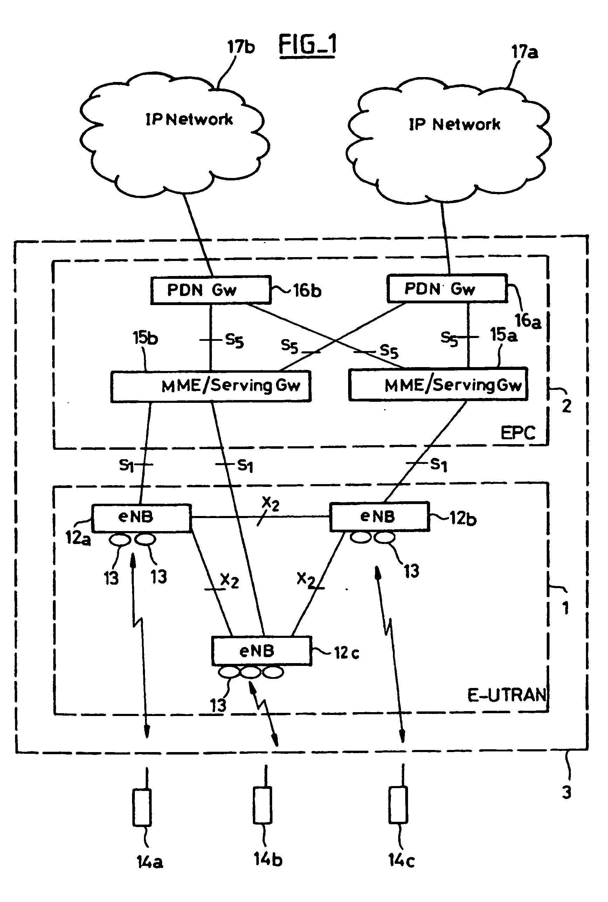

Figure 1 shows the architecture of such a LTE wireless communication system. Shown on Fig. 1 is a core network 2, called "Evolved Packet Core" (EPC), which is linked on the one hand to one or more packet data networks (e.g. IP networks) 17a, 17b and on the other hand, by means of a logical interface referred to as the *S1* interface, to a radio access network 1 called E-UTRAN (Evolved Universal Terrestrial Radio Access Network). A single node, called eNode-B (or eNB) has been specified as the network element of an E-UTRAN. The eNBs 12a-12c are distributed over the territory covered by the E-UTRAN, and are each capable of communicating by radio (on the air interface) with mobile terminals 14a, 14b, 14c called UE ("User Equipment"), through respective radio coverage areas also referred to as cells 13. The logical interface between eNBs 12a - 12c and UEs 14a, 14b, 14c is referred to as the *Uu* interface. The eNBs 12a-12c are interconnected to form a mesh-type network, and communicate with each other by means of a logical interface referred to as the *X2* interface. One may consider schematically that the features of the UMTS radio access network Node-B and RNC nodes have been embedded in a single E-UTRAN node which is the eNB.

Document WO 2008/074669 describes a method for providing emergency services in a wireless communication network of the LTE type through the establishment of a special-purpose bearer dedicated for emergency services.

The Evolved UTRAN comprises elements of layers 1 and 2 of the ISO model, such as a physical layer for layer 1, and a medium access control (MAC) layer, a radio link control (RLC) layer, and a packet data convergence protocol (PDCP) layer for layer 2, with a view to providing the links required on the radio interface Uu. The E-UTRAN also comprises a stage for controlling the radio resources (RRC, "Radio Resource Control") belonging to layer 3, as is described in the 3GPP TS 36.331 technical specification "Evolved Universal Terrestrial Radio Access (E-UTRA) Radio Resource Control (RRC); protocol

specification (Release 8)", version 8.4.0, published in December 2008 by the 3GPP.

The core network EPC is connected to external packet data networks through packet data network gateways (PDN GWs) 16a, 16b. The PDN GWs performs packet routing between the EPC and external PDNs 17a, 17b, policy enforcement, charging support, and IP address allocation for UEs 14a-14c. The S1 logical interface connects the E-UTRAN to the EPC via two logical nodes, the Serving Gateway (S-GW) and the Mobility Management Entity (MME).

The protocols over the Uu and S1 interfaces are divided into user plane protocols, and control plane protocols. The control plane corresponds to the signaling information flows between the e-UTRAN and the EPC. The control plane includes all the RRC (Radio Resource Control) E-UTRAN signaling and NAS (Non-Access Stratum) signaling, which refers to functions and services which are independent from the access technology. The NAS signaling includes the SM (Session Management) layers in charge of all the signaling procedures between the user terminal and the Packet Core network MME for session and bearer management, security control and authentication. Several radio bearers can be established between the terminal and the network, each of them corresponding to a specific transmission scheme, radio protection and priority handling.

The S1 control plane interface is a signaling interface which support a set of functions and procedures, such as bearer-level procedures (bearer setup, modification and release), handover procedures, NAS signaling transport (directed to the transport of signaling between the MME and the UE over the S1 interface), and paging procedures. At the S1 interface level, the bearer, referred to as E-RAB in the 3GPP specifications, corresponds to the combination of the S1 segment of a communication session and the radio bearer (i.e. the radio interface path). The E-RAB is defined in the 3GPP TS 36.401 as the concatenation of an S1 bearer and the corresponding data radio bearer (as opposed to a signaling radio bearer). The data radio bearers are managed by the E-UTRAN (more specifically by the eNB nodes) through the control plane in the Access Stratum.

The user plane protocols address aspects such as providing the E-RAB service, that is carrying user data through the access stratum. The control plane protocols are designed for the control of the E-RABs and the connection between a UE and the network.

The S-GW and the MME may be implemented in the same physical node, or in separate physical nodes. In such case, the S1 interface comprises a S1-U user plane interface, which carries user data between an eNB and a S-GW, and a S1-C control plane interface, which carries signaling information between an eNB and an MME.

The S-GW is, like the PDN GW, is a packet data gateway associated to the user plane. The S-GW performs packet routing between the E-UTRAN and the EPC, and mobility anchoring.

Unlike the two packet data gateways, S-GW and PDN GW, which are associated with the user plane, the MME manages signaling information. The MME supports the following features: NAS signaling, which is the signaling layer between the EPC and the UE covering functions such as network attachment and data session setup, active session mobility support, idle mode terminal mobility management, authentication and key agreement (AKA), and determination of S-GW and PDN GW at bearer establishment.

A UE (or user) who wishes to receive certain services which require registration will need to register with the network. This registration procedure is referred to in the 3GPP specifications as network attachment, and described in details in Section 5.3.2. of the 3GPP technical specification TS 23.401, entitled "General Packet Radio Service (GPRS) enhancements for Evolved Universal Terrestrial Radio Access network (E-UTRAN) access (Release 8)", v. 8.4.1., published by the 3GPP in December 2008. The LTE specifications also provide for an always-on type IP connectivity for a UE which is enabled by establishing (or setting up) a so-called "default" bearer during network attachment. In the present description, the terms "establish" and "setup" are considered interchangeable). Therefore, the expression default bearer designates resources which are established for a UE during the procedure of network attachment for this UE, and remains established throughout the time of UE attachment to the network. The expression "default bearer" is used as opposed to "dedicated bearers", which designate resources other than the default bearer resources, which may be established for the same UE, possibly but not necessarily together with the default bearer. Indeed, the attach procedure for a UE may comprise the establishment of one or multiple dedicated bearers in addition to the default bearer for that UE.

The control plane signaling protocol between the eNodeB and the Mobility Management Entity (MME) is called S1 Application Protocol (S1AP), and is currently being specified by the 3GPP in the technical specification TS 36.413, entitled "Evolved Universal Terrestrial Radio Access Network (E-UTRAN); S1 Application Protocol (S1AP) (Release 8)", version 8.4.0, published by the 3GPP in December 2008.

The S1AP specification TS 36.413 defines a set of elementary procedures, each consisting of an initiating message and possibly a response message. The initiating message may include a plurality of requests, as is the case for instance for the E-RAB setup request message which can be directed to the setup of a plurality of E-RABs (see Section 8.2.1. of the above-identified TS 36.413 specification). For the elementary procedures which include a response message, the response can be one of the following: (1) successful, consisting then in a message indicating that the elementary procedure successfully completed with the receipt of a response, (2) unsuccessful, consisting in a message indicating that the whole elementary procedure failed, or (3) successful and unsuccessful, consisting in a message which reports both a successful and unsuccessful outcome for the different included request. In addition, in the latter case of an successful and unsuccessful response, the TS 36.413 requires that the response message used is the one defined for successful outcome.

The S1AP protocol is currently specified as providing functions such as E-RAB management functions (setting up, modifying and releasing E-RABs), initial context transfer function, UE Capability Info Indication function, Mobility functions, UE Paging, S1 interface management functions, NAS signaling transport functions and S1 UE context release function.

The E-RAB management function support consists of a set of elementary procedures and associated E-RAB management messages. The set of E-RAB management messages includes an E-RAB setup request message, an E-RAB setup response message, an E-RAB modify request message, and E-RAB modify response message, and E-RAB release command message, an E-RAB release response message, and an E-RAB release indication message. Details of the definition of those messages may be found in the above-mentioned 3GPP specification TS 36.413 v8.4.0, sections 9.1.3.1 to 9.1.3.7. The initiating E-RAB management messages may typically include a plurality of requests, each directed to a specific E-RAB. This capability is reflected in one of the information elements defined for those messages, which consists of a list of E-RABs to which the message is directed. The response for those initiating E-RAB management messages which are directed to a plurality of E-RABs may be of the third type described above, that is, both successful and unsuccessful.

For instance, the E-RAB setup request message is defined as a message from the MME to the eNB, which is used for requesting the eNB to assign resources on the Uu and S1 interfaces for one or several E-RABs. As currently defined, it includes a list of information elements each directed to a bearer E-RAB to be setup, and each comprising a bearer identifier ("E-RAB ID") and an information element which contains an EPC towards UE or UE towards EPC message (i.e. message of the NAS layer defined above) that is transferred without interpretation in the eNB, referred to as "NAS PDU".

Assuming that the UE 14a, located in the radio coverage of one of the cells of an eNB 12a of the E-UTRAN 1, wants to initiate an attach procedure to the LTE network 3, the UE 14a will send to the eNB 12a an attach request. The eNB 12a selects an MME node in the EPC packet core network 2, e.g. the MME 15b, and forwards the attach request message to the selected MME 15b. In case the attach request is granted by the MME 15b, the MME 15b sends an attach accept message to the eNB 12a. This attach accept message is contained in an S1AP context management message of the INITIAL CONTEXT SETUP REQUEST type. More specifically, the attach acceptance message is included in the NAS PDU associated with the default E-RAB bearer in the list of information elements comprising E-RAB identifiers and associated data units. Furthermore, the LTE specifications allow for the combining of this attach procedure associated signaling with the signaling associated with bearers other than the default bearer. In such case, the S1AP initial context setup message will contain a list of bearer identifier and associated NAS Packet Data Units. Only the NAS PDU associated with the default bearer will contain the attach acceptance message.

Upon receipt of the INITIAL CONTEXT SETUP REQUEST S1AP message with a list of several bearer identifiers and associated NAS packet Data Units, the eNB 12a initiates the establishment of the bearers, which may or may not be successful. In all cases where at least one of the bearers can be successfully established, the eNB 12a returns a successful response message (INITIAL CONTEXT SETUP RESPONSE). The NAS PDU associated with those bearers which could not be successfully established will not be delivered to the UE 14a. In cases where the default bearer could not be successfully established, the NAS PDU associated with the default bearer, which contains the attach acceptance message, will also not be delivered to the UE 14a. This creates a situation wherein the UE and the network are desynchronized, in the sense that the UE will not receive the attach acceptance message whereas the response to the initiating initial context setup message will be reported as successful to the MME node and whereas some other dedicated bearers may have been established. Such de-synchronisation will be difficult and costly to recover from. Furthermore, the UE 14a will likely time out its network attach procedure therefore failing the whole attach procedure, even though some bearers have been established.

The present invention aims at improving the attach procedure of the UE.

In a first aspect, the invention proposes a method for managing resources in a wireless communication system comprising a radio access network, said radio access network comprising at least one access network control node capable of setting up radio bearer resources responsive to reception of a request for setting up bearer resources relative to a user equipment of the wireless communication system. The method comprises the step of sending to the access network control node, during the attach procedure of the user equipment to the wireless communication system, in a request for setting up a plurality of bearer resources, a criterion for selecting a bearer resource associated with the attach acceptance message of the user equipment among other bearer resources in said plurality of bearer resources.

The wireless communication system may further comprise a core network connected to the radio access network by means of at least a core network control node connected to the access network control node, in which case the criterion for selecting a bearer resource may be sent to the access network control node by the core network control node.

According to one embodiment of the invention, the criterion for selecting a bearer resource associated with the attach acceptance message of the user equipment among other bearer resources in said plurality of bearer resources comprises a flag for marking said bearer resource associated with the attach acceptance message of the user equipment, said flag being included in a message requesting setup of said plurality of bearer resources.

According to another embodiment of the invention, wherein said request for setting up a plurality of bearer resources comprises a list of bearer resource identifiers, said criterion for selecting a bearer resource associated with the attach acceptance message of the user equipment among other bearer resources in said plurality of bearer resources comprises predetermined organisation of said list of bearer resource identifiers. For example, the identifier of said bearer resource associated with the attach acceptance message of the user equipment among other bearer resources in said plurality of bearer resources can be located in said list of bearer resource identifiers at a predetermined position.

The access network control node, responsive to the reception of said request for setting up a plurality of bearer resources, may advantageously select the bearer resource associated with the attach acceptance message (i.e. the default bearer) according to the criterion and give priority to the setting up of said bearer resource over the setting up of other bearer resources in said plurality of bearer resources.

Also, the access network control node, responsive to the reception of said request for setting up a plurality of bearer resources, may select the bearer resource associated with the attach acceptance message according to the criterion and send a failure response when the setting up of said bearer resource is unsuccessful.

The methods proposed herein may advantageously be embodied in a Long Term Evolution (LTE) wireless communication system, the access network control node being an evolved Node-B (eNodeB), and the core network control node being a mobility management entity (MME).

Another broad aspect provides a computer readable medium having processor executable instructions thereon for implementation by a processor, the instructions executing the above-mentioned methods.

Another broad aspect provides a control node in a wireless communication system, such as an LTE mobility management entity, adapted to implement the above-mentioned methods.

According to another broad aspect the invention proposes an access network control node in a radio access network of a wireless communication system, comprising means for receiving a request for setting up a plurality of bearer resources relative to a user equipment of the wireless communication system, means for setting up radio bearer resources, and means for processing, a criterion for selecting a bearer resource associated an the attach acceptance message of the user equipment among other bearer resources in said plurality of bearer resources, wherein said criterion is received in a request for setting up a plurality of bearer resources,.

The means for processing a criterion may advantageously be adapted for processing a criterion which comprises a flag for marking said bearer resource associated with the attach acceptance message of the user equipment, said flag being included in a message requesting setup of said plurality of bearer resources.

Also, the means for receiving a request for setting up a plurality of bearer resources relative to a user equipment of the wireless communication system may be adapted for receiving a request for setting up a plurality of bearer resources which comprises a list of bearer resource identifiers, and the means for processing a criterion may be adapted for processing a criterion which comprises predetermined organisation of said list of bearer resource identifiers.

The access network control node may also comprise means for, responsive to the reception of said request for setting up a plurality of bearer resources, selecting the bearer resource associated with the attach acceptance message according to the criterion, and giving priority to the setting up of said bearer resource over the setting up of other bearer resources in said plurality of bearer resources.

The access network control node may also comprise means for, responsive to the reception of said request for setting up a plurality of bearer resources, selecting the bearer resource associated with the attach acceptance message according to the criterion, and sending a failure response when the setting up of said bearer resource is unsuccessful.

Other aspects and features of the present invention will become apparent to those ordinarily skilled in the art upon review of the following description of specific embodiments of the invention in conjunction with the accompanying figures.

Embodiments of the invention will now be described with reference to the attached drawings in which:
- FIG. 1 is a diagram of a LTE wireless communication system to which the invention may be applied;
- FiGs. 2a and 2b show an LTE S1AP protocol message flow diagram in accordance to various embodiments of the present invention;
- FIG. 3 shows an LTE S1AP protocol message flow diagram in accordance to an embodiment of the present invention;

In the present description, the invention will be described more particularly in its application, non limiting, to cellular wireless communication systems of the LTE type ("Long Term Evolution"). In this system, the invention finds application within the framework of the S1-AP protocol currently being specified by the 3GPP (3^{rd} Generation Partnership Project).

Reference is made to the LTE network illustrated in Fig. 1. Assuming that the UE 14a, located in the radio coverage of one of the cells of an eNB 12a of the E-UTRAN 1, wants to initiate an attach procedure to the LTE network 3, the UE 14a will send to the eNB 12a an attach request. The eNB 12a selects an MME node in the EPC packet core network 2, e.g. the MME 15b, and forwards the attach request message to the selected MME 15b. In case the attach request is granted by the MME 15b, the MME 15b sends an attach accept message to the eNB 12a. This attach accept message is contained in an S1AP context management message of the INITIAL CONTEXT SETUP REQUEST type. More specifically, the attach acceptance message is included in the NAS PDU associated with the default E-RAB bearer in the list of information elements comprising E-RAB identifiers and associated data units. Furthermore, the LTE specifications allow for the combining of this attach procedure associated signaling with the signaling associated with bearers other than the default bearer. In such case, the S1AP INITIAL CONTEXT SETUP REQUEST message will contain a list of bearer identifiers and associated NAS Packet Data Units. Only the NAS PDU associated with the default bearer will contain the attach acceptance message.

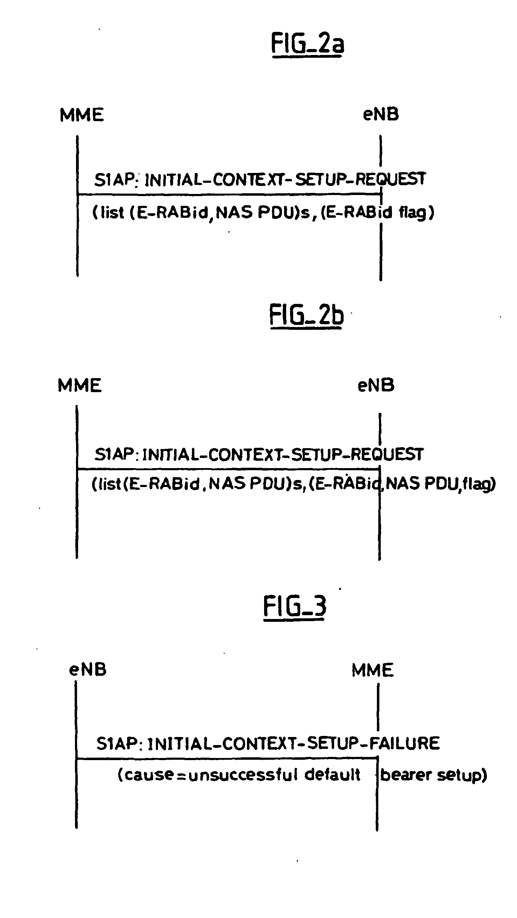

According to one embodiment of the invention, the INITIAL CONTEXT SETUP REQUEST message, which is an S1AP protocol initiating message requesting setup of one or a plurality or bearer resources for the UE 14a, includes an additional information element which corresponds to a selection criterion embodied as a flag marking the default E-RAB bearer. This is illustrated in Fig. 2a, which shows an example of such a message INITIAL CONTEXT SETUP REQUEST sent from an MME to an eNB.

According to another embodiment of the invention, the INITIAL CONTEXT SETUP REQUEST message, which is an S1AP protocol initiating message requesting setup of one or a plurality or bearer resources for the UE 14a, includes an additional information element which corresponds to a selection criterion embodied as a flag marking the default E-RAB bearer and the associated NAS PDU. This is illustrated in Fig. 2b, which shows an example of such a message INITIAL CONTEXT SETUP REQUEST sent from an MME to an eNB.

Such a flag as illustrated in Fig. 2a and 2b is an example of selection criterion which allows the eNB 12a selecting the default bearer among the other bearers listed in the setup request.

According to yet another embodiment of the invention, the default bearer identifier occupies a predetermined position in the list of bearer to be setup by the eNB. For example, the list of a plurality of bearers to be setup (among which is the default bearer) can start with the default bearer. In such case, there is no specific flag that marks the default bearer, and the selection criterion is embodied in the predetermined manner in which the list of bearer identifiers is laid out in the setup request.

Once the eNB receives the means for discriminating the default bearer resource, it can prioritize the allocation of resources for that bearer thereby minimizing the proportion of unsuccessful default bearer establishment. Indeed, the eNB who knows the default bearer identifier can prioritize the setup of this default bearer, which is associated to data related to the attach acceptance message of the UE, over the setup of bearers other than the default bearer.

Furthermore, the eNB may also be configured so as to return an unsuccessful response message when the default bearer resource cannot be established. In the context of the S1AP protocol, this would for instance take the form of an INITIAL CONTEXT SETUP FAILURE message, possibly with a specific cause indication as illustrated on Fig. 3 (see Section 8.3.1.3 of the TS 36.413 v. 8.4.0). The INITIAL CONTEXT SETUP FAILURE message is defined in Section 9.1.4.3, and includes a cause information element. According to another aspect of the invention, a new radio network layer cause, specific to the cases where the eNB cannot successfully setup the default bearer, is introduced.

The eNB 12a comprises an S1AP protocol interface module, through which it can receive requests for setting up a plurality of bearer resources relative to a user equipment of the LTE system. Such requests are communicated to a control module, which controls the operations of a radio module, in particular for the purpose of setting up radio bearer resources. The control module is adapted for processing the request received from the interface module, and in particular processing the criterion for selecting the default bearer resource among the bearer resources for which establishment has been requested.

According to an embodiment, the control module processes a criterion which comprises a flag for marking the default bearer resource.

According to another embodiment, the control module processes a criterion which comprises predetermined organisation of the list of bearer resource identifiers.

In another embodiment, the control module processes the criterion which provides the eNB 12a with identification of the default bearer resource, and is designed so as to request from the radio module setting up of a radio bearer corresponding to the default bearer resource in priority over the establishment of other radio bearers.

In yet another embodiment, the control module processes the criterion which provides the eNB 12a with identification of the default bearer resource, and is designed so as control the S1AP protocol interface module to send an INITIAL CONTEXT SETUP FAILURE message if the radio module reports failure of the default radio bearer.

## Claims

1. A method for managing resources in a wireless communication system comprising a radio access network, said radio access network comprising at least one access network control node capable of setting up radio bearer resources responsive to reception of a request for setting up bearer resources relative to a user equipment of the wireless communication system, the wireless communication system further comprising a core network connected to the radio access network by means of at least a core network control node connected to the access network control node, the method comprising the step of sending to the access network control node, during the attach procedure of the user equipment to the wireless communication system, in a request for setting up a plurality of bearer resources, a criterion for selecting a bearer resource associated with the attach acceptance message of the user equipment among other bearer resources in said plurality of bearer resources, wherein said criterion for selecting a bearer resource is sent to the access network control node from the core network control node.

2. The method according to any one of claims 1, wherein said criterion for selecting a bearer resource associated with the attach acceptance message of the user equipment among other bearer resources in said plurality of bearer resources comprises a flag for marking said bearer resource associated with the attach acceptance message of the user equipment, said flag being included in a message requesting setup of said plurality of bearer resources.

3. The method according to any one of the preceding claims, wherein said request for setting up a plurality of bearer resources comprises a list of bearer resource identifiers, and wherein said criterion for selecting a bearer resource associated with the attach acceptance message of the user equipment among other bearer resources in said plurality of bearer resources comprises predetermined organisation of said list of bearer resource identifiers.

4. The method according to claim 3, wherein the identifier of said bearer resource associated with the attach acceptance message of the user equipment among other bearer resources in said plurality of bearer resources is located in said list of bearer resource identifiers at a predetermined position.

5. The method according to any one of the preceding claims, wherein the access network control node, responsive to the reception of said request for setting up a plurality of bearer resources, selects the bearer resource associated with the attach acceptance message according to the criterion, and gives priority to the setting up of said bearer resource over the setting up of other bearer resources in said plurality of bearer resources.

6. The method according to any one of the preceding claims, wherein the access network control node, responsive to the reception of said request for setting up a plurality of bearer resources, selects the bearer resource associated with the attach acceptance message according to the criterion, and sends a failure response when the setting up of said bearer resource is unsuccessful.

7. The method according to claim 6, wherein the access network control node, includes in the failure response a failure cause information element specific to this unsuccessful case.

8. The method according to any one of the preceding claims, wherein the wireless communication system is a Long Term Evolution (LTE) wireless communication system, the access network control node is an evolved Node-B (eNodeB), and the core network control node is a mobility management entity (MME).

9. A computer readable medium having processor executable instructions thereon for implementation by a processor, the instructions executing a method according to claims 1 to 8.

10. A core network control node in a wireless communication system adapted to implement the method according to claims 1 to 5.

11. An LTE mobility management entity comprising a core network control node according to claim 11.

12. A access network control node in a radio access network of a wireless communication system, comprising means for receiving a request for setting up a plurality of bearer resources relative to a user equipment of the wireless communication system, means for setting up radio bearer resources, and means for processing, a criterion for selecting a bearer resource associated an the attach acceptance message of the user equipment among other bearer resources in said plurality of bearer resources, wherein said criterion is received in a request for setting up a plurality of bearer resources.

13. An access network control node according to claim 12 wherein the means for processing a criterion are adapted for processing a criterion which comprises a flag for marking said bearer resource associated with the attach acceptance message of the user equipment, said flag being included in a message requesting setup of said plurality of bearer resources.

14. An access network control node according to claim 12 wherein the means for receiving a request for setting up a plurality of bearer resources relative to a user equipment of the wireless communication system are adapted for receiving a request for setting up a plurality of bearer resources which comprises a list of bearer resource identifiers, and wherein said means for processing a criterion are adapted for processing a criterion which comprises predetermined organisation of said list of bearer resource identifiers.

15. An access network control node according to any one of claims 12 to 14, comprising means for, responsive to the reception of said request for setting up a plurality of bearer resources, selecting the bearer resource associated with the attach acceptance message according to the criterion, and giving priority to the setting up of said bearer resource over the setting up of other bearer resources in said plurality of bearer resources.

16. An access network control node according to any one of claims 12 to 14, comprising means for, responsive to the reception of said request for setting up a plurality of bearer resources, selecting the bearer resource associated with the attach acceptance message according to the criterion, and sending a failure response when the setting up of said bearer resource is unsuccessful.

17. An LTE eNode-B node, comprising an access network control node according to any one of claims 12 to 16.

18. A wireless system comprising an access network control node according to any one of claims 12 to 16, and a core network control node according to claim 11.

## Patentansprüche

1. Verfahren zur Verwaltung von Ressourcen in einem drahtlosen Kommunikationssystem, welches ein Funkzugangsnetzwerk umfasst, wobei das besagte Funkzugangsnetzwerk mindestens einen Zugangsnetzwerk-Steuerknoten umfasst, der fähig ist, in Reaktion auf den Empfang einer Anforderung für den Aufbau von Trägerressourcen in Bezug auf ein Benutzerendgerät des drahtlosen Kommunikationssystems Funkträgerressourcen aufzubauen, wobei das drahtlose Kommunikationssystem weiterhin ein über mindestens einen Kernnetzwerk-Steuerknoten, der an den Zugangsnetzwerk-Steuerknoten angeschlossen ist, an das Funkzugangsnetzwerk angeschlossenes Kernnetzwerk umfasst, wobei das Verfahren den Schritt des Sendens an den Zugangsnetzwerk-Steuerknoten, während des Verbindungsvorgangs des Benutzerendgeräts mit dem drahtlosen Kommunikationssystem, in einer Anforderung für den Aufbau einer Mehrzahl von Trägerressourcen, eines Kriteriums für die Auswahl einer mit einer Verbindungsakzeptierungs-Nachricht des Benutzerendgeräts assoziierten Trägerressource unter anderen Trägerressourcen in der besagten Mehrzahl von Trägerressourcen umfasst, wobei das besagte Kriterium für die Auswahl einer Trägerressourcen von dem Kernnetzwerk-Steuerknoten an den Zugangsnetzwerk-Steuerknoten gesendet wird.

2. Verfahren nach Anspruch 1, wobei das besagte Kriterium für die Auswahl einer mit der Verbindungsakzeptierungs-Nachricht des Benutzerendgeräts assoziierten Trägerressource unter anderen Trägerressourcen in der besagten Mehrzahl von Trägerressourcen ein Flag zum Markieren der besagten mit der Verbindungsakzeptierungs-Nachricht des Benutzerendgeräts assoziierten Trägerressourcen umfasst, wobei das besagte Flag in einer Nachricht, welche den Aufbau der besagten Mehrzahl von Trägerressourcen anfordert, enthalten ist.

3. Verfahren nach einem beliebigen der vorstehenden Ansprüche, wobei die besagte Anforderung für den Aufbau einer Mehrzahl von Trägerressourcen eine Liste von Trägerressourcenkennungen enthält, und wobei das besagte Kriterium für die Auswahl einer mit der Verbindungsakzeptierungs-Nachricht des Benutzerendgeräts assoziierten Trägerressource unter anderen Trägerressourcen in der besagten Mehrzahl von Trägerressourcen die vorbestimmte Organisation der besagten Listen von Trägerressourcenkennungen umfasst.

4. Verfahren nach Anspruch 3, wobei sich die Kennung der besagten mit der Verbindungsakzeptierungs-Nachricht des Benutzerendgeräts assoziierten Trägerressource unter anderen Trägerressourcen in der besagten Mehrzahl von Trägerressourcen an einer vorbestimmten Stelle in der besagten Liste von Trägerressourcenkennungen befindet.

5. Verfahren nach einem beliebigen der vorstehenden Ansprüche, wobei der Zugangsnetzwerk-Steuerknoten in Reaktion auf den Empfang der besagten Anforderung für den Aufbau einer Mehrzahl von Trägerressourcen die mit der Verbindungsakzeptierungs-Nachricht assoziierte Trägerressource gemäß dem Kriterium auswählt und dem Aufbau der besagten Trägerressource gegenüber dem Aufbau anderer Trägerressourcen in der besagten Mehrzahl von Trägerressourcen den Vorrang gewährt.

6. Verfahren nach einem beliebigen der vorstehenden Ansprüche, wobei der Zugangsnetzwerk-Steuerknoten in Reaktion auf den Empfang der besagten Anforderung für den Aufbau einer Mehrzahl von Trägerressourcen die mit der Verbindungsakzeptierungs-Nachricht assoziierte Trägerressource gemäß dem Kriterium auswählt und eine Fehlerantwort sendet, wenn der Aufbau der besagten Trägerressource fehlschlägt.

7. Verfahren nach Anspruch 6, wobei der Zugangsnetzwerk-Steuerknoten ein für diesen fehlgeschlagenen Fall spezifisches Fehlerursache-Informationselement in die Fehlerantwort einfügt.

8. Verfahren nach einem beliebigen der vorstehenden Ansprüche, wobei das drahtlose Kommunikationssystem ein drahtloses Long Term Evolution bzw. LTE-Kommunikationssystem ist, wobei der Zugangsnetzwerk-Steuerknoten ein Evolved Node-B (eNodeB) ist und der Kernnetzwerk-Steuerknoten eine Mobilitätsverwaltungsentität (MME) ist.

9. Computerlesbares Medium mit darauf gespeicherten prozessorausführbaren Befehlen für die Implementierung durch einen Prozessor, wobei die Befehle ein Verfahren gemäß den Ansprüchen 1 bis 8 ausführen.

10. Kernnetzwerk-Steuerknoten in einem drahtlosen Kommunikationssystem, ausgelegt für die Implementierung des Verfahrens gemäß den Ansprüchen 1 bis 4.

11. LTE-Mobilitätsverwaltungsentität, umfassend einen Kernnetzwerk-Steuerknoten gemäß Anspruch 10.

12. Zugangsnetzwerk-Steuerknoten in einem Funkzugangsnetzwerk eines drahtlosen Kommunikationssystems, umfassend Mittel für den Empfang einer Anforderung für den Aufbau einer Mehrzahl von Trägerressourcen in Bezug auf ein Benutzerendgerät des drahtlosen Kommunikationssystems, Mittel für den Aufbau von Funkträgerressourcen, und Mittel für die Verarbeitung eines Kriteriums für die Auswahl einer mit einer Verbindungsakzeptierungs-Nachricht für das Benutzerendgerät assoziierten Trägerressource unter anderen Trägerressourcen in der besagten Mehrzahl von Trägerressourcen, wobei das besagte Kriterium in einer von einem Kernnetzwerk-Steuerknoten gesendeten Anforderung für den Aufbau einer Mehrzahl von Trägerressourcen empfangen wird.

13. Zugangsnetzwerk-Steuerknoten nach Anspruch 12, wobei die Mittel für die Verarbeitung eines Kriteriums für die Verarbeitung eines Kriteriums, welches ein Flag zum Markieren der besagten mit der Verbindungsakzeptierungs-Nachricht des Benutzerendgeräts assoziierten Trägerressource umfasst, ausgelegt sind, wobei das Flag in einer Nachricht, welche den Aufbau der besagten Mehrzahl von Trägerressourcen anfordert, enthalten ist.

14. Zugangsnetzwerk-Steuerknoten nach Anspruch 12, wobei die Mittel für den Empfang einer Anforderung für den Aufbau einer Mehrzahl von Trägerressourcen in Bezug auf ein Benutzerendgerät des drahtlosen Kommunikationssystems für den Empfang einer Anforderung für den Aufbau einer Mehrzahl von Trägerressourcen, welche eine Liste von Trägerressourcenkennungen enthält, ausgelegt sind, und wobei die Mittel für die Verarbeitung eines Kriteriums für die Verarbeitung eines Kriteriums, welches die vorbestimmte Organisation der besagten Liste von Trägerressourcenkennungen umfasst, ausgelegt sind.

15. Zugangsnetzwerk-Steuerknoten nach einem beliebigen der Ansprüche 12 bis 14, umfassend Mittel zur Auswahl, in Reaktion auf den Empfang der besagten Anforderung für den Aufbau einer Mehrzahl von Trägerressourcen, der mit der Verbindungsakzeptierungs-Nachricht assoziierten Trägerressource gemäß dem Kriterium, und zur Gewährung des Vorrangs des Aufbaus der besagten Trägerressource gegenüber dem Aufbau anderer Trägerressourcen in der besagten Mehrzahl von Trägerressourcen.

16. Zugangsnetzwerk-Steuerknoten nach einem beliebigen der Ansprüche 12 bis 14, umfassend Mittel zur Auswahl, in Reaktion auf den Empfang der besagten Anforderung für den Aufbau einer Mehrzahl von Trägerressourcen, der mit der Verbindungsakzeptierungs-Nachricht assoziierten Trägerressource gemäß dem Kriterium, und zum Senden einer Fehlerantwort, wenn der Aufbau der besagten Trägerressource fehlschlägt.

17. LTE-eNode-B-Knoten, umfassend einen Zugangsnetzwerk-Steuerknoten gemäß einem beliebigen der Ansprüche 12 bis 16.

18. Drahtloses System, umfassend einen Zugangsnetzwerk-Steuerknoten gemäß einem beliebigen der Ansprüche 12 bis 16, und einen Kernnetzwerk-Steuerknoten gemäß Anspruch 10.

## Revendications

1. Procédé de gestion de ressources dans un système de communication sans fil comprenant un réseau d'accès radio, ledit réseau d'accès radio comprenant au moins un noeud de commande de réseau d'accès pouvant établir des ressources de porteuse radio en réponse à la réception d'une demande d'établissement de ressources de porteuse par rapport à un équipement utilisateur du système de communication sans fil, le système de communication sans fil comprenant en outre un coeur de réseau connecté au réseau d'accès radio au moyen d'au moins un noeud de commande de coeur de réseau connecté au noeud de commande de réseau d'accès, le procédé comprenant l'étape d'envoi au noeud de commande de réseau d'accès, durant la procédure de rattachement de l'équipement utilisateur au système de communication sans fil, dans une demande d'établissement d'une pluralité de ressources de porteuse, d'un critère pour sélectionner une ressource de porteuse associée à un message d'acceptation de rattachement de l'équipement utilisateur parmi d'autres ressources de porteuse dans ladite pluralité de ressources de porteuse, dans lequel ledit critère pour sélectionner une ressource de porteuse est envoyé au noeud de commande de réseau d'accès à partir du noeud de commande de coeur de réseau.

2. Procédé selon la revendication 1, dans lequel ledit critère de sélection d'une ressource de porteuse associée au message d'acceptation de rattachement de l'équipement utilisateur parmi d'autres ressources de porteuse dans ladite pluralité de ressources de porteuse comprend un indicateur pour marquer ladite ressource de porteuse associée au message d'acceptation de rattachement de l'équipement utilisateur, ledit indicateur étant inclus dans un message demandant l'établissement de ladite pluralité de ressources de porteuse.

3. Procédé selon l'une quelconque des revendications précédentes, dans lequel ladite demande d'établissement d'une pluralité de ressources de porteuse comprend une liste d'identifiants de ressource de porteuse, et dans lequel ledit critère de sélection d'une ressource de porteuse associée au message d'acceptation de rattachement de l'équipement utilisateur parmi d'autres ressources de porteuse dans ladite pluralité de ressources de porteuse comprend l'organisation prédéterminée de ladite liste d'identifiants de ressource de porteuse.

4. Procédé selon la revendication 3, dans lequel l'identifiant de ladite ressource de porteuse associée au message d'acceptation de rattachement de l'équipement utilisateur parmi d'autres ressources de porteuse dans ladite pluralité de ressources de porteuse est situé dans ladite liste d'identifiants de ressource de porteuse à une position prédéterminée.

5. Procédé selon l'une quelconque des revendications précédentes, dans lequel le noeud de commande de réseau d'accès, en réponse à la réception de ladite demande d'établissement d'une pluralité de ressources de porteuse, sélectionne la ressource de porteuse associée au message d'acceptation de rattachement conformément au critère, et donne la priorité à l'établissement de ladite ressource de porteuse par rapport à l'établissement d'autres ressources de porteuse dans ladite pluralité de ressources de porteuse.

6. Procédé selon l'une quelconque des revendications précédentes, dans lequel le noeud de commande de réseau d'accès, en réponse à la réception de ladite demande d'établissement d'une pluralité de ressources de porteuse, sélectionne la ressource de porteuse associée au message d'acceptation de rattachement conformément au critère, et envoie une réponse d'échec lorsque l'établissement de ladite ressource de porteuse échoue.

7. Procédé selon la revendication 6, dans lequel le noeud de commande de réseau d'accès comprend dans la réponse d'échec un élément d'information de cause d'échec propre à ce cas d'échec.

8. Procédé selon l'une quelconque des revendications précédentes, dans lequel le système de communication sans fil est un système de communication sans fil à évolution à long terme (LTE), le noeud de commande de réseau d'accès est un noeud B évolué (Noeud électronique B), et le noeud de commande de coeur de réseau est une entité de gestion de la mobilité (MME).

9. Support lisible par ordinateur présentant des instructions exécutables par un processeur sur celui-ci pour la mise en oeuvre par un processeur, les instructions exécutant un procédé selon les revendications 1 à 8.

10. Noeud de commande dans un système de communication sans fil adapté pour mettre en oeuvre le procédé selon les revendications 1 à 4.

11. Entité de gestion de la mobilité LTE comprenant un noeud de commande de coeur de réseau selon la revendication 10.

12. Noeud de commande de réseau d'accès dans un réseau d'accès radio d'un système de communication sans fil, comprenant des moyens pour recevoir une demande d'établissement d'une pluralité de ressources de porteuse par rapport à un équipement utilisateur du système de communication sans fil, des moyens pour établir des ressources de porteuse radio, et des moyens pour traiter, un critère pour sélectionner une ressource de porteuse associée à un message d'acceptation de rattachement de l'équipement utilisateur parmi d'autres ressources de porteuse dans ladite pluralité de ressources de porteuse, dans lequel ledit critère est reçu dans une demande d'établissement d'une pluralité de ressources de porteuse envoyée par un noeud de commande de coeur de réseau.

13. Noeud de commande de réseau d'accès selon la revendication 12 dans lequel les moyens de traitement d'un critère sont adaptés pour traiter un critère qui comprend un indicateur pour marquer ladite ressource de porteuse associée au message d'acceptation de rattachement de l'équipement utilisateur, ledit indicateur étant inclus dans un message demandant l'établissement de ladite pluralité de ressources de porteuse.

14. Noeud de commande de réseau d'accès selon la revendication 12 dans lequel les moyens de réception d'une demande d'établissement d'une pluralité de ressources de porteuse par rapport à un équipement utilisateur du système de communication sans fil sont adaptés pour recevoir une demande d'établissement d'une pluralité de ressources de porteuse qui comprend une liste d'identifiants de ressource de porteuse, et dans lequel lesdits moyens de traitement d'un critère sont adaptés pour traiter un critère qui comprend une organisation prédéterminée de ladite liste d'identifiants de ressource de porteuse.

15. Noeud de commande de réseau d'accès selon l'une quelconque des revendications 12 à 14, comprenant des moyens, en réponse à la réception de ladite demande d'établissement d'une pluralité de ressources de porteuse, pour sélectionner la ressource de porteuse associée au message d'acceptation de rattachement conformément au critère, et pour donner la priorité à l'établissement de ladite ressource de porteuse par rapport à l'établissement d'autres ressources de porteuse dans ladite pluralité de ressources de porteuse.

16. Noeud de commande de réseau d'accès selon l'une quelconque des revendications 12 à 14, comprenant des moyens, en réponse à la réception de ladite demande d'établissement d'une pluralité de ressources de porteuse, pour sélectionner la ressource de porteuse associée au message d'acceptation de rattachement conformément au critère, et pour envoyer une réponse d'échec lorsque l'établissement de ladite ressource de porteuse échoue.

17. Noeud électronique B LTE, comprenant un noeud de commande de réseau d'accès selon l'une quelconque des revendications 12 à 16.

18. Système sans fil comprenant un noeud de commande de réseau d'accès selon l'une quelconque des revendications 12 à 16, et un noeud de commande de cour de réseau selon la revendication 10.
